# EUROPÄISCHE PATENTSCHRIFT

(11) **EP 1 262 344 B1**
(45) Veröffentlichungstag und Bekanntmachung des Hinweises auf die Patenterteilung: **11.08.2004**
(21) Anmeldenummer: 02007782.2
(22) Anmeldetag: 06.04.2002
(51) Int. Cl.: B60H 1/00

(54) **Wärmetauscher für eine Klimaanlage eines Kraftfahrzeuges**
Heat exchanger for a vehicle air condition
Echangeur de chaleur pour climatisation de véhicule

(30) Priorität: 30.05.2001 DE 10126221
(43) Veröffentlichungstag der Anmeldung: 04.12.2002
(73) Patentinhaber: Behr GmbH & Co., 70469 Stuttgart (DE)
(72) Erfinder: Kampf, Hans, Dipl-Ing., 71404 Korb (DE)
(74) Vertreter: Grauel, Andreas, Dr.

(56) Entgegenhaltungen:
- DE-A- 19 509 787
- DE-A- 19 751 702
- DE-C- 19 851 402

## Beschreibung

Die Erfindung betrifft einen Wärmetauscher für eine Klimaanlage eines Kraftfahrzeuges gemäß dem Oberbegriff des Anspruchs 1 sowie eine Klimaanlage.

Es ist ein Ziel der Kraftfahrzeughersteller, den Kraftstoffverbrauch des Fahrzeugs zu reduzieren. Eine Maßnahme zur Reduzierung des Verbrauchs ist das Abschalten des Motors bei vorübergehendem Stillstand, beispielsweise beim Halten an einer Ampel, auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund warum derartige Fahrzeuge nicht mit einer Klimaanlage ausgerüstet sind, denn bei Motorstillstand kann auch ein für eine Klimaanlage notwendiger Kompressor nicht angetrieben werden, so daß im idle-stop-Betrieb eine Klimaanlage die notwendige Kälteleistung nicht bereitstellen kann.

Zur Lösung dieses Problems ist in der EP 0 995 621 A2 vorgeschlagen, den Verdampfer der Klimaanlage durch das bei Abkühlen von feuchter Luft anfallende Kondensat zu vereisen, so daß im Idle-stop-Betrieb, wenn der Motor abgeschaltet ist, die Luft durch das dann abtauende Eis abkühlbar ist. Dieses Verfahren hat jedoch zahlreiche Nachteile. Die Wassermenge, die in der Luft vorhanden ist und die für die Vereisung des Verdampfers notwendig ist, hängt von den klimatischen Umgebungsbedingungen ab. So kann es vorkommen, daß bei geringer Luftfeuchtigkeit nicht genügend Kondenswasser für die Vereisung zur Verfügung steht. Des weiteren ist zur Vereisung des Verdampfers in der Regel ein relativ großer Zeitraum notwendig, so daß diese bekannte Klimaanlage erst nach einer relativ langen Fahrzeit im Idle-stop-Betrieb arbeiten kann. Ein weiteres Problem ist, daß in der Regel der Verdampfer ungleichmäßig vereist, so daß der Verdampfer vereiste und nicht vereiste Bereiche aufweist. Des weiteren kann die Vereisung so stark sein, daß die Luft durch den Verdampfer nicht oder nur mit hohem Druckverlust strömen kann. In jedem Fall erzeugt die Eisschicht einen luftseitigen Druckverlust, was zu einer erhöhten Gebläseleistung führt. Weiter nachteilig ist, daß sich an feuchten Oberflächen Bakterien leicht festsetzen und unangenehme Gerüche verursachen.

DE-A-197 51 702 offenbart einen wärmetauscher gemäß dem Oberbegriff des Anspruchs 1, bei dem die Speichermittel jedoch zwischen den Leitungsmitteln angeordnet sind.

Ausgehend von diesem Stand der Technik ist es Aufgabe der Erfindung, einen Wärmetauscher bereitzustellen, der auch bei ausgeschaltetem Kompressor Kälteleistung liefert und mit dem weitestmöglich die vorgenannten Nachteile vermieden werden können. Eine weitere Aufgabe ist es eine diesen Wärmetauscher enthaltenden Klimaanlage bereitzustellen, die in allen Betriebs- und Umgebungsbedingungen einschließlich der Idle-stop-Situation eine Klimatisierung des Fahrzeugs gewährleistet.

Diese Aufgabe wird gelöst durch einen Wärmetauscher mit den Mekmalen des Anspruchs 1 sowie eine Klimaanlage mit den Merkmalen des Anspruchs 12.

Der erfindungsgemäße Wärmetauscher weist in bekannter Weise Leitungsmittel für ein Kältemittel auf, beispielsweise Flachrohre, zwischen denen Luft zum Wärmetausch mit dem Kältemittel hindurchströmen kann, wobei die Leitungsmittel von Speichermitteln, in denen ein Speichermedium enthalten ist, durchsetzt sind. Damit ist in vorteilhafter Weise ein Wärmetauscher geschaffen, der sowohl bei laufendem Kompressor der Klimaanlage eine Abkühlung der Luft bewirken kann, wobei gleichzeitig das Speichermedium abgekühlt wird, so daß auch nach Ausschalten des Kompressors, die Luft weiterhin abgekühlt werden kann. Dieser Wärmetauscher bildet somit eine Kombination aus Kältespeicher und Verdampfer und wird im nachfolgenden auch Speicherverdampfer genannt.

Um auf bewährte Konstruktionsprinzipien zurückgreifen zu können, sind die Leitungsmittel vorteilhafterweise als Flachrohre oder durch jeweils ein Scheibenpaar gebildet.

Flachrohre bzw. Scheiben lassen sich auch leicht von den Speichermittel durchsetzen, indem die Speichermittel in bevorzugter Weise als quer zu den Leitungsmitteln verlaufende Rohre ausgebildet sind, die durch die Leitungsmittel gesteckt sind.

Bevorzugt durchsetzen die Speichermittel alle Leitungsmittel, so daß das Speichermedium durch das in den Leitungsmitteln strömende Kältemittel optimal abgekühlt werden kann.

In vorteilhafter Weise sind Leitungs- und Speichermittel miteinander verlötet, damit ein guter Wärmeübergang hergestellt ist.

Wenn die Speichermittel als Turbulenzerzeuger für die den Wärmetauscher durchströmende Luft ausgebildet sind, kann auf ansonsten übliche Wellrippen zwischen den Leitungsmitteln verzichtet werden. Dadurch ist die Montage vereinfacht und Material, Teile und Kosten gespart.

Dabei ist es von Vorteil, wenn die Speichermittel parallel verlaufend zueinander versetzt, vorzugsweise auf Lücke versetzt, angeordnet sind, so daß möglichst alle Speichermittel von der Luft umströmt werden.

Zur Erhöhung der Wärmetauschleistung können, wenn die Speichermittel zwischen den Leitungsmitteln genügend Platz belassen, zusätzlich Rippen vorgesehen sein.

In einer kostengünstigen Ausführung enthält das Speichermedium im wesentlichen Wasser, vorzugsweise ein Wasser-Glysanthin-Gemisch.

Wenn das Speichermedium bei ca. 3 bis 7°C einen Phasenübergang hat, ist selbst im Normalbetrieb der Klimaanlage, in der der Wärmeübertrager eine Oberflächentemperatur größer 0°C hat, um eine Verdampfervereisung zu verhindern, das Speichermedium mit Kälte "aufladbar". Dann ist mit einem einzigen Verdampfer sowohl ein normaler Kühlbetrieb, also während der Motor und damit der Kompressor läuft, möglich, als auch ein Speicherbetrieb, also ein Kühlbetrieb während des Motorstillstandes.

Im Folgenden wird die Erfindung anhand von Ausführungsbeispielen unter Bezugnahme auf die Zeichnung im einzelnen erläutert. In der Zeichnung zeigen:
- Fig. 1: eine stark schematische Ansicht eines erfindungsgemäßen Wärmetauschers;
- Fig. 2: eine Ansicht des Wärmetauschers in Luftströmungsrichtung;
- Fig. 3: ein Leitungsmittel;
- Fig. 5 und 7: schematische Blockschaltbilder eines Kältemittelkreislaufs einer erfindungsgemäßen Klimaanlage;

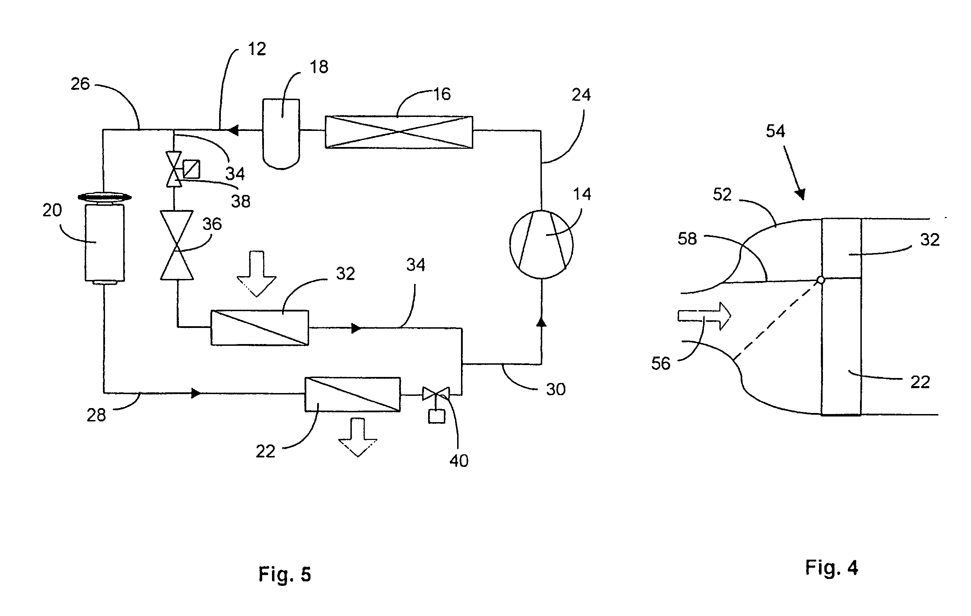

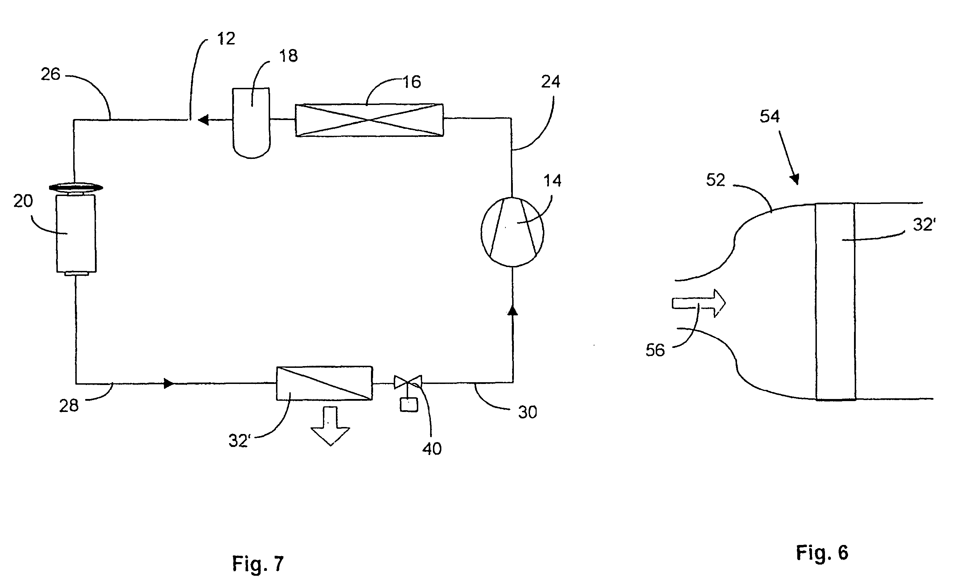

- Fig. 4 und 6: einen Teil des Klimageräts mit Verdampfer.

Ein erfindungsgemäßer Wärmetauscher 100 umfaßt Leitungsmittel 102 für ein Kältemittel, die beispielsweise als Flachrohre ausgebildet oder vorzugsweise durch Scheiben 104 aufgebaut sein können. Ein Scheibenpaar 106 bildet jeweils einen U-förmigen Strömungskanal, in dem das Kältemittel U-förmig entsprechend der Pfeile 108 geführt ist. Die Scheibenpaare 106 sind untereinander verbunden zur Bildung von Zufluß- und Abflußsammelräumen 110 und 112, die wiederum in geeigneter, nicht näher dargestellter Weise an Kältemittelleitungen anschließbar sind. Zwischen jeweils benachbarten Scheibenpaaren 106 kann Luft zum Wärmetausch hinduchströmen. Ein derartiger Scheibenwärmetauscher ist beispielsweise aus der DE 195 09 787 A1 bekannt.

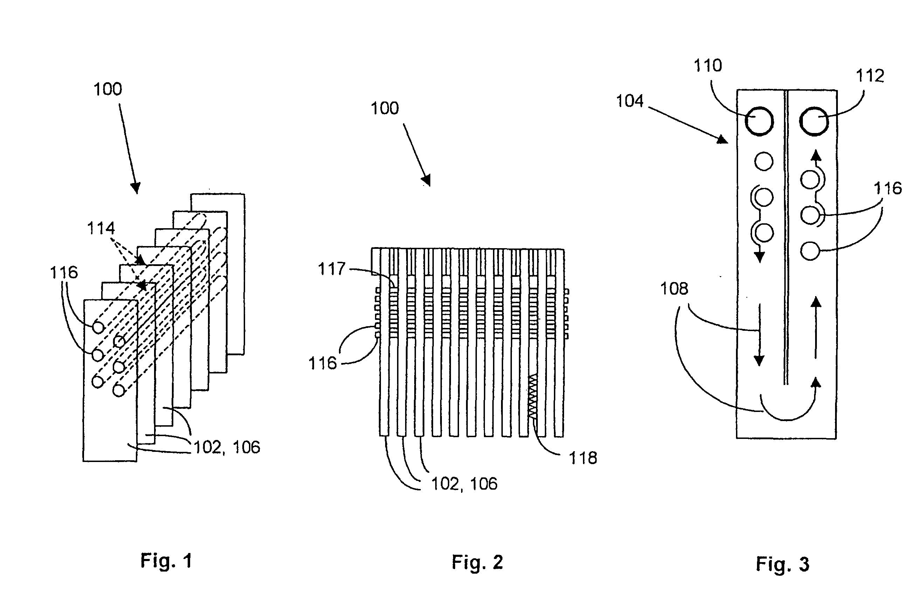

Erfindungsgemäß sind die Leitungsmittel 102, in dem in den Fig. 1 bis 3 dargestellten Ausführungsbeispiel also die Scheibenpaare 106, von Speichermitteln 114 durchsetzt. Die Speichermittel 114 sind vorzugsweise als Rohre 116 ausgebildet, die durch die Scheibenpaare 106 durchgesteckt und mit diesen dicht verlötet sind. Dabei sind bevorzugt alle Leitungsmittel 102 von jedem Rohr 116 durchsetzt. Der besseren Übersichtlichkeit wegen sind in den Fig. 1 bis 3 lediglich einige der Rohre 116 dargestellt. Der Querschnitt der Rohre 116 kann rund, eckig, oval oder eine sonstige bekannte Form aufweisen. Die Rohre 116 sind bevorzugt parallelverlaufend auf Lücke versetzt zueinander angeordnet, wie in Fig. 1 und 3 dargestellt. Die Gesamtanzahl der Rohre 116 in einem erfindungsgemäßen Wärmetauscher 100 sowie deren Größe des Querschnitts, können über Optimierungsrechnungen und/oder Versuche den jeweiligen Vorgaben für den Wärmetauscher 100 angepasst werden.

Die Speichermittel 114 sind geschlossene Behältnisse, die ein Speichermedium, das vorzugsweise im wesentlichen Wasser umfaßt, enthalten. Durch Wärmetausch mit dem Kältemittel, das innerhalb der Leitungsmittel 102 die Rohre 116 umströmt (Fig. 3), wird das Speichermedium vorzugsweise eingefroren, wobei gleichzeitig den Wärmetauscher 100 durchströmende Luft abgekühlt werden kann, indem die Luft die zwischen den Leitungsmitteln 102 gelegenen Abschnitte 117 der Rohre 116 umströmt. Wenn ein das Kältemittel fördernder Kompressor nicht mehr arbeitet, kann der erfindungsgemäße Wärmetauscher 100 die Luft weiterhin abkühlen, durch Wärmetausch zwischen der Luft und dem Speichermedium.

Die Speichermittel 114 sind derart ausgebildet und/oder angeordnet, daß die zwischen den Leitungsmitteln hindurchströmende Luft verwirbelt wird zum verbesserten Wärmetausch mit dem Kältemittel bzw. Speichermedium. Zusätzlich kann in einer Ausgestaltung der Erfindung zwischen benachbarten Scheibenpaaren 106 eine Rippe, z.B. Wellrippe, vorgesehen sein, wie dies in Fig. 2 bei der Bezugsziffer 118 angedeutet ist.

Fig. 4 zeigt eine mögliche Anordnung eines erfindungsgemäßen Wärmetauschers 100 in einem Klimagerät 54. Der erfindungsgemäße Wärmetauscher 100 arbeitet als Speicherverdampfer 32. Neben dem Speicherverdampfer 32 ist noch ein weiterer, "gewöhnlicher" Verdampfer 22 bekannter Bauart vorgesehen. Beide Verdampfer 22 und 32 werden zur Abkühlung der Luft eingesetzt. Die Verdampfer 22 und 32 sind in einem Luftführungsgehäuse 52 des Klimageräts 54 in bekannter Weise angeordnet. Derartige Klimageräte befinden sich in der Regel in der Instrumententafel des Kraftfahrzeugs. Über ein nicht näher dargestelltes Gebläse kann Luft in Pfeilrichtung 56 durch die Verdampfer 22 und 32 gefördert werden. Der luftseitig hinter den Verdampfern anschließende Teil des Klimageräts 54, in dem in der Regel ein Heizkörper und verschiedene Luftklappen und Luftkanäle zu den einzelnen Luftauslässen angeordnet sind, ist in Fig. 2 nicht weiter dargestellt. Luftseitig vor den Verdampfern 22 und 32 ist ein Luftstromsteuerelement 58 derart angeordnet, daß in der einen Endstellung des Luftstromsteuerelements 58 die Luft durch den ersten Verdampfer 22 geführt wird und in der anderen Endstellung (gestrichelte Linie in Fig. 2) die Luft durch den Speicherverdampfer 32 geführt wird.

Der zu dem Klimagerät 54 zugehörige Kältemittelkreislauf 12 umfaßt einen Kompressor 14, einen Kältemittelkondensator 16, einen Kältemittelsammler 18, ein Expansionsventil 20 und den Verdampfer 22, die über Kältemittelleitungen 24, 26, 28, 30 miteinander verbunden sind. Kältemittelseitig parallel zu dem ersten Verdampfer 22 ist der Speicherverdampfer 32 in den Kältemittelkreislauf 12 eingebunden, wobei von der Kältemittelleitung 26 eine Kältemittelleitung 34 abzweigt, die nach dem ersten Verdampfer 22 in die Kältemittelleitung 30 mündet. Vor Speicherverdampfer 32 ist ein Expansionsorgan 36 und ein Absperrventil 38 in der Kältemittelleitung 34 angeordnet. Über das Absperrventil 38 kann der Kältemitteldurchfluß durch den Speicherverdampfer 32 gesperrt werden. Ebenso ist nach dem ersten Verdampfer 22 ein Absperrventil 40 vorgesehen, so daß auch der Kältemitteldurchfluß durch den ersten Verdampfer 22 absperrbar ist. Durch die getrennte Kältemittelführung durch den Speicherverdampfer 32 kann die Temperatur des Kältemittels im Speicherverdampfer 32 niedriger eingestellt sein als im gewöhnlichen Verdampfer 22, so daß das Speichermedium optimal mit Kälte "beladen" werden kann.

Der erste Verdampfer 22 kann in nicht näher dargestellter Weise in bekannter Weise aufgebaut sein. So kann es sich beispielsweise um einen Flachrohrverdampfer handeln, bei dem kältemittelseitig parallel geschaltete Flachrohre sich zwischen zwei Sammelrohren erstrecken und zwischen den Flachrohren wärmeableitende Wellrippen vorgesehen sind. Ein solcher Verdampfer ist beispielsweise aus der DE 197 29 497 A1 bekannt. Ebenso könnte der Verdampfer 22 auch als Scheibenverdampfer ausgebildet sein.

Wenn der Motor des Kraftfahrzeugs und damit der Kompressor 14 läuft, befindet sich das Luftstromsteuerelement 58 in seiner ersten Endstellung und die Luft wird von dem ersten Verdampfer 22 in einem gewöhnlichen Verdampferbetrieb abgekühlt. Bei Kompressorstillstand kann das Luftstromsteuerelement 58 in die zweite Endstellung gebracht werden, so daß die Luft dann über den Speicherverdampfer 32 abgekühlt werden kann.

In dem dargestellten Ausführungsbeispiel sind die beiden Verdampfer 22 und 32 zwei einzelne Verdampfer. In einer weiteren Ausführungsform, die nicht näher dargestellt ist, können die beiden Verdampfer 22 und 32 aber auch eine gemeinsame Baueinheit bilden, so daß es sich dann um einen einzigen Verdampfer mit zwei Teilbereichen handelt, wobei der erste Teilbereich dem Verdampfer 22 entspricht und lediglich kältemittelverdampfende Eigenschaften hat und der zweite Teilbereich dem Speicherverdampfer entspricht und zusätzlich die das Speichermedium enthaltenden Speichermittel aufweist.

In einer weiteren, in Fig. 6 dargestellten Ausführungsform der Erfindung ist nur ein Verdampfer 32' als Kühlwärmetauscher vorgesehen, der erfindungsgemäß aufgebaut ist. Der Verdampfer 32' ermöglicht sowohl einen gewöhnlichen Verdampferbetrieb als auch einen Speicherbetrieb. Da der Speicher im gewöhnlichen Verdampferbetrieb beladen wird, also das Speichermedium eingefroren werden soll und der gewöhnliche Verdampferbetrieb bei Verdampferoberflächentemperaturen T > 0°C erfolgt, um ein Vereisen des Verdampfers zu vermieden, wird bevorzugt ein Speichermedium eingesetzt, daß bei ca. 3 bis 7°C einen Phasenwechsel aufweist.

Der zugehörige Kältekreislauf ist in Fig. 7 dargestellt und unterscheidet sich von dem in Fig. 5 dargestellten nur insoweit als der Nebenzweig über einen separaten Speicherverdampfer entfällt.

## Patentansprüche

1. Wärmetauscher für eine Klimaanlage (54) eines Kraftfahrzeuges mit Leitungsmitteln (102) für ein Kältemittel, zwischen denen Luft zum Wärmetausch hindurchströmen kann, und mit Speichermitteln (114), in denen ein Speichermedium enthalten ist, **dadurch gekennzeichnet, daß** die Leitungsmittel (102) von den Speichermitteln (114) durchsetzt sind.

2. Wärmetauscher nach Anspruch 1, **dadurch gekennzeichnet, daß** die Leitungsmittel als Flachrohre ausgebildet sind.

3. Wärmetauscher nach Anspruch 1, **dadurch gekennzeichnet, daß** die Leitungsmittel (102) durch jeweils ein Scheibenpaar (106) gebildet sind.

4. Wärmetauscher nach einem der vorhergehenden Ansprüche, **dadurch gekennzeichnet, daß** die Speichermittel (114) als quer zu den Leitungsmitteln (102) verlaufende Rohre (116) ausgebildet sind, die durch die Leitungsmittel (102) hindurchgesteckt sind.

5. Wärmetauscher nach einem der vorhergehenden Ansprüche, **dadurch gekennzeichnet, daß** die Speichermittel (114) alle Leitungsmittel (102) durchsetzen.

6. Wärmetauscher nach einem der vorhergehenden Ansprüche, **dadurch gekennzeichnet, daß** die Speichermittel (114) mit den Leitungsmitteln (102) verlötet sind.

7. Wärmetauscher nach einem der vorhergehenden Ansprüche, **dadurch gekennzeichnet, daß** die Speichermittel (114) als Turbulenzerzeuger für die durchströmende Luft ausgebildet sind.

8. Wärmetauscher nach einem der vorhergehenden Ansprüche, **dadurch gekennzeichnet, daß** die Speichermittel (114) untereinander parallel verlaufend und zueinander versetzt angeordnet sind.

9. Wärmetauscher nach einem der vorhergehenden Ansprüche, **dadurch gekennzeichnet, daß** zwischen den Leitungsmitteln (102) Rippen (118) angeordnet sind.

10. Wärmetauscher nach einem der vorhergehenden Ansprüche, **dadurch gekennzeichnet, daß** das Speichermedium im wesentlichen Wasser enthält.

11. Wärmetauscher nach einem der vorhergehenden Ansprüche, **dadurch gekennzeichnet, daß** das Speichermedium in einem Temperaturbereich von ca. 3 bis 7°C einen Phasenübergang hat.

12. Klimaanlage für ein Kraftfahrzeug mit einem Wärmetauscher nach einem der vorhergehenden Ansprüche.

13. Klimaanlage nach Anspruch 13, **dadurch gekennzeichnet, daß** der Wärmetauscher (100) den einzigen Kühlwärmetauscher (32') der Klimaanlage (54) bildet.

## Claims

1. Heat exchanger for an air-conditioning system (54) of a motor vehicle with conveying means (102) for a coolant, between which air is able to circulate for the purpose of exchanging heat, and having storage means (114) in which a storage medium is contained, **characterised in that** the storage means (114) extend through the conveying means (102).

2. Heat exchanger as claimed in claim 1, **characterised in that** the conveying means are flat tubes.

3. Heat exchanger as claimed in claim 1, **characterised in that** the conveying means (102) respectively comprise a pair of plates (106).

4. Heat exchanger as claimed in one of the preceding claims, **characterised in that** the storage means (114) are provided in the form of tubes (116) running transversely to the conveying means (102) which are inserted through the conveying means (102).

5. Heat exchanger as claimed in one of the preceding claims, **characterised in that** the storage means (114) extend through all the conveying means (102).

6. Heat exchanger as claimed in one of the preceding claims, **characterised in that** the storage means (114) are soldered to the conveying means (102).

7. Heat exchanger as claimed in one of the preceding claims, **characterised in that** the storage means (114) are provided in the form of turbulence generators for the circulating air.

8. Heat exchanger as claimed in one of the preceding claims, **characterised in that** the storage means (114) extend parallel, one underneath the other, and are arranged offset from one another.

9. Heat exchanger as claimed in one of the preceding claims, **characterised in that** fins (118) are disposed between the conveying means (102).

10. Heat exchanger as claimed in one of the preceding claims, **characterised in that** the storage medium essentially contains water.

11. Heat exchanger as claimed in one of the preceding claims, **characterised in that** the storage medium exhibits a phase transition within a temperature of range from approximately 3 to 7°C.

12. Air-conditioning system for a motor vehicle with a heat exchanger as claimed in one of the preceding claims.

13. Air-conditioning system as claimed in claim 13, **characterised in that** the heat exchanger (100) constitutes the sole cooler-heat exchanger (32') of the air-conditioning system (54).

## Revendications

1. Echangeur de chaleur pour un système de climatisation (54) d'un véhicule automobile comprenant des moyens (102) formant des conduites pour un agent réfrigérant, conduites entre lesquelles peut passer de l'air prévu pour l'échange de chaleur, et des moyens (114) formant des accumulateurs dans lesquels est contenu un produit pour accumulateurs,
**caractérisé en ce que** les moyens (102) formant des conduites sont traversés par les moyens (114) formant des accumulateurs.

2. Echangeur de chaleur selon la revendication 1, **caractérisé en ce que** les moyens formant des conduites sont configurés comme des tuyaux plats.

3. Echangeur de chaleur selon la revendication 1, **caractérisé en ce que** les moyens (102) formant des conduites sont formés à chaque fois par une paire de plaques (106).

4. Echangeur de chaleur selon l'une quelconque des revendications précédentes, **caractérisé en ce que** les moyens (114) formant des accumulateurs sont configurés comme des tuyaux (116) s'étendant de façon transversale par rapport aux moyens (102) formant des conduites, lesquels tuyaux sont traversés par les moyens (102) formant des conduites.

5. Echangeur de chaleur selon l'une quelconque des revendications précédentes, **caractérisé en ce que** les moyens (114) formant des accumulateurs traversent tous les moyens (102) formant des conduites.

6. Echangeur de chaleur selon l'une quelconque des revendications précédentes, **caractérisé en ce que** les moyens (114) formant des accumulateurs sont brasés avec les moyens (102) formant des conduites.

7. Echangeur de chaleur selon l'une quelconque des revendications précédentes, **caractérisé en ce que** les moyens (114) formant des accumulateurs sont configurés comme des générateurs à turbulence pour l'air traversant.

8. Echangeur de chaleur selon l'une quelconque des revendications précédentes, **caractérisé en ce que** les moyens (114) formant des accumulateurs sont disposés en s'étendant de façon parallèle l'un par rapport à l'autre et en étant décalés l'un par rapport à l'autre.

9. Echangeur de chaleur selon l'une quelconque des revendications précédentes, **caractérisé en ce que** des ailettes de refroidissement (118) sont disposées entre les moyens (102) formant des conduites.

10. Echangeur de chaleur selon l'une quelconque des revendications précédentes, **caractérisé en ce que** le produit pour accumulateurs contient essentiellement de l'eau.

11. Echangeur de chaleur selon l'une quelconque des revendications précédentes, **caractérisé en ce que** le produit pour accumulateurs a un point de transition de phase dans une plage de température comprise entre environ 3°C et 7°C.

12. Système de climatisation pour un véhicule automobile comprenant un échangeur de chaleur selon l'une quelconque des revendications précédentes.

13. Système de climatisation selon la revendication 13, **caractérisé en ce que** l'échangeur de chaleur (100) forme l'unique échangeur de chaleur à refroidissement (32') du système de climatisation (54).
